Europäisches Patentamt

European Patent Office

Office européen des brevets

(19)

(11) Veröffentlichungsnummer: **0 252 330**
A2

(12) **EUROPÄISCHE PATENTANMELDUNG**

(21) Anmeldenummer: 87108513.0

(22) Anmeldetag: 12.06.87

(51) Int. Cl.³: **G 11 B 15/44**
G 11 B 15/18, G 11 B 15/20

(30) Priorität: 08.07.86 DE 3622859

(43) Veröffentlichungstag der Anmeldung:
13.01.88 Patentblatt 88/2

(84) Benannte Vertragsstaaten:
DE FR GB IT

(71) Anmelder: GRUNDIG E.M.V. Elektro-Mechanische
Versuchsanstalt Max Grundig holländ. Stiftung & Co. KG.
Kurgartenstrasse 37
D-8510 Fürth(DE)

(72) Erfinder: Kleinlein, Herbert Grundig E.M.V Max Grundig
Holländ Stiftung & Co KG Kurgartenstrasse 37
D-8510 Fürth/Bayern(DE)

(72) Erfinder: Bratenstein, Ernst Grundig E.M.V Max Grundig
Holländ Stiftung & Co KG Kurgartenstrasse 37
D-8510 Fürth/Bayern(DE)

(72) Erfinder: Gärtner, Friedrich Grundig E.M.V Max Grundig
Holländ Stiftung & Co KG Kurgartenstrasse 37
D-8510 Fürth/Bayern(DE)

(54) Video-Magnetbandgerät.

(57) Beschrieben ist ein Video-Magnetbandgerät, das eine Einrichtung zur kraftaufwendigen Betätigung eines Bandfühlhebels während des Umschaltens vom Geräte-Spielbetrieb in den Geräte-Suchrücklauf aufweist. Für die erforderliche Drehrichtungsänderung der Bandwickelteller ist ein von einem Antriebsmotor angetriebenes Schwenkgetriebe vorgesehen. Der gesteuerte Kraftaufwand zur Betätigung des Bandfühlhebels wird durch Eingriff eines dem Schwenkgetriebe zugeordneten Einrückzahnrades in einen feststehenden Zahnstift bewirkt. Hierdurch wird kurzzeitig eine Zwangsführung des Einrückzahnrades erreicht, die für die Steuerung des Bandfühlhebels ausgenutzt wird.

Fig. 1

EP 0 252 330 A2

VIDEO-MAGNETBANDGERÄT

BESCHREIBUNG

Die vorliegende Erfindung bezieht sich auf eine
Einrichtung zur kraftaufwendigen Betätigung eines
Bandfühlhebels in einem Kassetten-Video-
Magnetbandgerät während des Umschaltens vom
Geräte-Spielbetrieb in den Geräte-Suchrücklauf,
wobei das Gerät nur einen Antriebsmotor für den
Antrieb der beiden Bandwickelteller aufweist, und
die Bandwickelteller über ein mittig angeordnetes
Schwenkgetriebe, das über einen Riemen mit dem
Antriebsmotor verbunden ist, angetrieben werden,
sowie die Bandlaufumkehrung durch
Drehrichtungsänderung des Antriebsmotors vorgenommen
wird, und das Schwenkgetriebe aus einem Schwenkhebel mit einem darauf gelagerten Einrückzahnrad und einem
Antriebszahnrad besteht.

Es sind Bandgeräte zur Tonaufzeichnung und Wiedergabe
bekannt, die Teilfunktionen eines Gerätes durch
Drehrichtungsänderung des Antriebsmotors steuern.
So ist aus der DE-PS 828 923 und aus dem
DE-GM 1 730 790 eine Einrichtung zur Steuerung eines
Tonbandgerätes bekannt, bei der das Umspulen des
bandförmigen Tonträgers durch Drehrichtungsänderung
des Antriebsmotors gesteuert wird. Bei diesen
bekannten Ausführungen wird ein Zwischenrad um die
Welle des Antriebsmotors verschwenkt und gelangt
abhängig von der Drehrichtung des Motors mit der
Auf- oder Abwickelspule in Eingriff. Hierzu ist das
Zwischenrad vorzugsweise auf einem für sich zentrisch
auf der Motorwelle gelagerten Schwenkhebel aufgesetzt.
Das Zwischenrad befindet sich in Eingriff zu einem
auf der Motorwelle fest aufgesetzten Ritzel. Ferner
ist ein Reibschluß zwischen Schwenkhebel und dem auf
der Motorwelle angeordneten Ritzel gegeben. Eine
bekannte und erweiterte Einrichtung sieht vor, daß
das in gleicher Weise auf einem Schwenkhebel angeordnete
Zwischenrad während des Schwenkvorgangs eine
gerätefest angeordnete Rollbahn durchläuft. Hierdurch
ist eine kraftaufwendige Gerätefunktion schaltbar.
Das Schalten einer erforderlichen kraftaufwendigen Gerätefunktion ist zum Beispiel dann erforderlich, wenn beim Umschalten vom Geräte-Spielbetrieb in den Geräte-Suchrücklauf die für den Spielbetrieb erforderliche Bandzugregelung aufzuheben ist. Die Drehrichtungsumschaltung für die Wickelspulen erfolgt über ein Schwenkgetriebe durch Drehrichtungsänderung des Antriebsmotors nahezu ohne zusätzlichen Kraftaufwand. Das bei dieser Schaltfunktion gleichzeitige Betätigen eines unter Federspannung stehenden Bandfühlhebels erfordert jedoch einen zusätzlich kurzzeitigen Kraftaufwand. Die Kraftumsetzung in der hierfür bisher bekannten Einrichtung geschieht über eine aufwendig auf dem Schwenkhebel angebrachte Steuerkurve. Nachteilig ist hierbei, daß durch das freie Ineinandergreifen der Getriebeteile ein unbeabsichtigtes Versperren des Getriebes möglich ist.

Der Erfinder hat sich deshalb die Aufgabe gestellt, bei Geräten der eingangs näher bezeichneten Gattung diesen Nachteil zu beseitigen und eine Einrichtung zu schaffen, die in einfachster Weise eine kraftaufwendige Betätigung eines Bandfühlhebels in einem Kassetten-Video-Magnetbandgerät während des Umschaltens vom Geräte-Spielbetrieb in den Geräte-Suchrücklauf ermöglicht, wobei das Gerät nur einen Antriebsmotor für die Bandwickelspulen aufweist und die Bandlaufumkehrung über ein Schwenkgetriebe und durch Drehrichtungsänderung des Antriebsmotors vorgenommen wird.

Diese Aufgabe wird erfindungsgemäß durch die im Kennzeichen des Anspruchs 1 angegebenen Merkmale gelöst.

Die Erfindung wird nachfolgend anhand der Zeichnungen erläutert.

Fig. 1    ist eine vereinfachte Draufsicht auf die erfindungswesentlichsten Antriebsteile der beiden Band-Wickelteller eines Video-Magnetbandgeräts mit einer Einrichtung zur kraftaufwendigen Betätigung eines Bandfühlhebels,

Fig. 2    ist eine Ansicht ähnlich der Fig. 1, jedoch mit einer veränderten Lage des Bandfühlhebels.

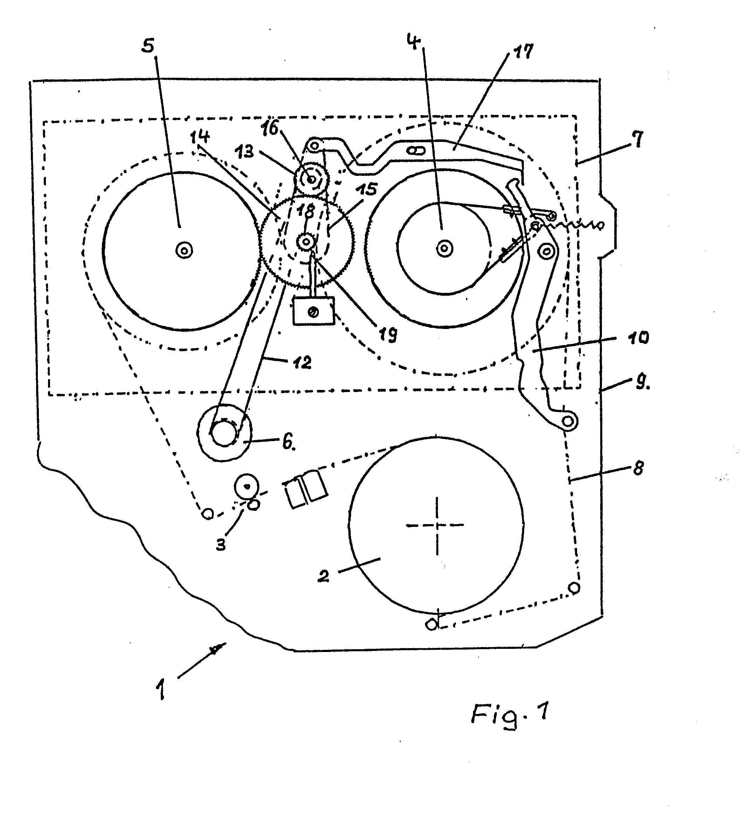

Die Figur 1 zeigt in sehr vereinfachter Darstellung ein Video-Magnetbandgerät 1, das im wesentlichen aus einer Kopftrommel 2, einem Capstan-Antrieb 3, zwei wechselweise antreibbare Bandwickelspulenmitnehmer, die vereinfacht als Band-Wickelteller 4 und 5 bezeichnet werden, sowie einem Bandwickel-Antriebsmotor 6 besteht. Alle übrigen Geräte- Steuer- und Antriebsteile sind aus Gründen der Übersichtlichkeit nicht dargestellt.

Die Bandkassette 7 mit Bandwickel und aus der Kassette herausgezogenem Magnetband 8 sind in der Zeichnung strichpunktiert angedeutet. Alle Geräteteile für das Laufwerk des Video-Magnetbandgerätes sind auf einem Chassis 9 angeordnet. Während des Geräte-Spielbetriebes wird der Bandzug des Magnetbandes über einen Bandfühlhebel 10 geregelt. Hierzu wirkt der Bandfühlhebel auf ein Bremsband 11, das auf einen Flansch am Wickelteller 4 einwirkt. Angetrieben wird der Wickelteller 5 durch den Antriebsmotor 6, der über einen Riemen 12 mit einem Antriebszahnrad 13 gekoppelt ist. Das Antriebszahnrad 13 befindet sich in ständigem Eingriff zu einem Einrückzahnrad 14, das wechselweise auf den Wickelteller 4 und 5 eingreift. Für den Eingriff des Einrückzahnrades 14 in den Wickelteller 4 und 5 weisen die beiden Wickelteller im äußeren Bereich einen Zahnkranz auf. Das Antriebszahnrad und das Einrückzahnrad sind auf einem Schwenkhebel 15 gelagert und bilden mit der Wickelteller-Eingriffsmöglichkeit und dem Antriebsmotor ein Schwenkgetriebe. Das Schwenkgetriebe ist mittig zu den beiden Bandwickeltellern auf dem Gerätechassis gelagert. Der Eingriff des Schwenkgetriebes ändert sich durch die Drehrichtungsänderung des Antriebsmotors. Das Einrückzahnrad 14 ist über eine Friktionskupplung auf dem Schwenkhebel drehbar gelagert. Der Drehpunkt - Lagerachse 16 - des Schwenkhebels ist gleichzeitig
der Drehpunkt des Antriebszahnrads 13. Der
Schwenkhebel besteht vom Drehpunkt ausgehend aus
zwei Armteilen, wobei auf dem einen Schwenkarmteil
das Einrückzahnrad 14 gelagert ist, und auf dem
anderen Armteil ein Steuerschieber 17 eingehängt ist.
Der Steuerschieber ist verschiebbar auf dem Chassis
gelagert und greift lose in den unter Federspannung
stehenden Bandfühlhebel 10 ein. Beim Umschalten des
Wickelspulenantriebs vom Geräte-Spielbetrieb in den
Geräte-Suchrücklauf wird durch Drehrichtungsänderung
des Antriebsmotors das Schwenkgetriebe verschwenkt
und das Einrückzahnrad 14 kommt in Eingriff mit dem
Wickelteller 4, der dann das Magnetband in der
Kassette zurückspult. Gleichzeitig mit dem
Schwenkvorgang des Schwenkgetriebes wird der Steuers
Steuerschieber 17 verschoben. Der Steuerschieber
kommt somit in Eingriff zu einem Armteil des
Bandfühlhebels und wird hierdurch in eine die
Bandbremse des Wickeltellers lösende Stellung
gebracht. Die erforderliche Kraft zur Betätigung des
Bandfühlhebels wird dadurch erreicht, daß das
Einrückzahnrad über ein angeformtes Zahnritzel 18
kurzfristig und nur während des Schwenkvorgangs in
Eingriff zu einem feststehenden Zahnstift 19
gebracht wird. Hierdurch wird ein kraftschlüssiges
Abrollen des Zahnrades über den Zahnstift bewirkt.

Das Einrückzahnrad verbleibt somit während des
Schwenkvorgangs immer in Eingriff zu einem der beiden
Wickelteller und zum Zahnstift.

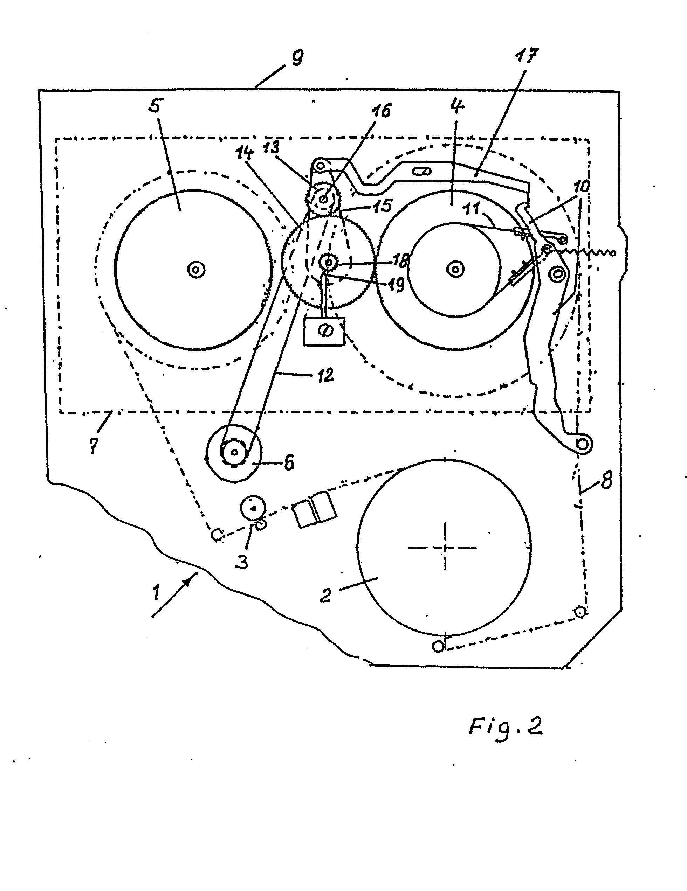

Die Figur 2 zeigt die Lage des Schwenkgetriebes nach
einem Schwenkvorgang, bei dem der Bandfühlhebel 10
in eine die Bandbremse des Wickeltellers 4 lösende
Stellung gebracht ist. Nachdem der Schwenkvorgang
des Schwenkgetriebes abgeschlossen ist, befindet sich
der Zahnstift 19 nicht mehr in Eingriff mit dem
Zahnritzel 18. Die Vorgänge des Schwenkgetriebes
wiederholen sich bei jeder Drehrichtungsänderung des
Antriebsmotors.

0252330

VIDEO-MAGNETBANDGERÄT

PATENTANSPRÜCHE

1. Einrichtung zur kraftaufwendigen Betätigung eines Bandfühlhebels in einem Kassetten-Video-Magnetbandgerät während des Umschaltens vom Geräte-Spielbetrieb in den Geräte-Suchrücklauf, wobei das Gerät nur einen Antriebsmotor für den Antrieb der beiden Bandwickelteller (4, 5) aufweist, und die Bandwickelteller über ein mittig angeordnetes Schwenkgetriebe, das über einen Riemen mit dem Antriebsmotor verbunden ist, angetrieben werden, sowie die Bandlaufumkehrung durch Drehrichtungsänderung des Antriebsmotors vorgenommen wird, und das Schwenkgetriebe aus einem Schwenkhebel (15) mit einem darauf gelagerten Einrückzahnrad (14) und einem Antriebszahnrad besteht, d a d u r c h g e k e n n z e i c h n e t , daß ein über ein Bremsband (11) auf nur eine Wickelspule (4) einwirkender Bandfühlhebel (10) über einen Steuerschieber (17) mit dem Schwenkgetriebe gekoppelt

2

ist, daß das Einrückzahnrad (14) auf dem
Schwenkgetriebe während des Schwenkvorganges über
ein angeformtes Zahnritzel (18) kurzzeitig in einen
einzelnen feststehenden Zahnstift (19) eingreift
und während des Eingriffs den Bandfühlhebel (10)
in eine bremsunwirksame Stellung bringt.

2. Einrichtung nach Anspruch 1, dadurch
gekennzeichnet, daß sich das Einrückzahnrad (14)
während des Schwenkvorgangs des Schwenkgetriebes
ständig in Eingriff zu einem der beiden
Bandwickelspulen (4, 5) und zu dem feststehenden
Zahnstift (19) befindet.

3. Einrichtung nach Anspruch 1 oder 2,
dadurch gekennzeichnet, daß dem feststehenden
Zahnstift (19) ein Steg zugeordnet und mit diesem
einstückig aus elastischem Kunststoff gefertigt
ist.

4. Einrichtung nach einem der bisherigen
Ansprüche, dadurch gekennzeichnet, daß das
Einrückzahnrad (14) mit dem angeformten Zahnritzel
(18) als Stufenzahnrad aus elastischem Kunststoff
gefertigt ist.

5. Einrichtung nach einem der bisherigen
Ansprüche, dadurch gekennzeichnet, daß das Einrückzahnrad (14) über eine Friktionskupplung mit dem Schwenkhebel (15) des Schwenkgetriebes drehbar verbunden ist.

6. Einrichtung nach einem der bisherigen Ansprüche, dadurch gekennzeichnet, daß das Einrückzahnrad (14) ständig in Eingriff zu dem Antriebszahnrad (13) ist, und das Antriebszahnrad gemeinsam mit dem Schwenkhebel (15) auf einer Lagerachse (16) gelagert ist.

7. Einrichtung nach einem der bisherigen Ansprüche, dadurch gekennzeichnet, daß das Antriebszahnrad (13) über einen elastischen Riemen (12) durch einen Antriebsmotor (6) angetrieben ist.

Fig. 1

0252330

0252330

Fig. 2